# EUROPÄISCHE PATENTSCHRIFT

(11) **EP 2 123 591 B1**
(45) Veröffentlichungstag und Bekanntmachung des Hinweises auf die Patenterteilung: **25.02.2015**
(21) Anmeldenummer: 09006710.9
(22) Anmeldetag: 19.05.2009
(51) Int. Cl.: B66C 15/06, G21C 19/10

(54) **Vorrichtung zum Überlastungsschutz eines Kranes**
Device for preventing a crane from being overloaded
Dispositif de protection contre les surcharges d'une grue

(30) Priorität: 20.05.2008 DE 102008024358
(43) Veröffentlichungstag der Anmeldung: 25.11.2009
(73) Patentinhaber: NKM Noell Special Cranes GmbH, 97209 Veitshöchheim (DE)
(72) Erfinder: Manger, Karl, 97279 Prosselsheim (DE); Krämer, Herbert, 97318 Kitzingen (DE)
(74) Vertreter: Lüdtke, Frank

(56) Entgegenhaltungen:
- EP-A2- 0 080 679
- WO-A1-2004/077177
- DE-B- 1 118 943
- DE-B- 1 221 410
- US-A- 3 827 514

## Beschreibung

Die Erfindung betrifft eine Vorrichtung zum Überlastungsschutz eines Kranes entsprechend den Merkmalen des ersten Patentanspruches.

Die Erfindung ist geeignet zum Überlastungsschutz eines Reaktorgebäudekranes mit ertüchtigendem Hilfshubwerk für den Transport von Reaktorelementen.

In Kernkraftwerken werden bei der Handhabung von Brennelementen, deren Gewicht kleiner als eine Tonne ist, auch Hubwerke mit einer sehr viel höheren Tragfähigkeit verwendet. Der vorhandene Reaktorgebäudekran kann zur Handhabung der Brennelemente genutzt werden, weist aber eine Tragfähigkeit von bis zu 40 t auf. Die Handhabung durch den Reaktorgebäudekran birgt die Gefahr, daß durch das Verklemmen eines Brennelementes in einer Führung das Brennelement überlastet und beschädigt wird. Es sind Lösungen bekannt, bei denen die Abschaltwerte der Lastmeßeinrichtungen für diesen Hebegang durch den Kranfahrer reduziert werden. Bedingt durch die Auslegung der Lastmeßvorrichtung auf die Nennlast des Hubwerkes ist dadurch jedoch kein befriedigender Schutz des Brennelementes gewährleistet.

Aus DE 10 2004 057 940 A1 ist ein Verfahren zum Umsetzen einer Schwerlast sowie Anschlagshilfen für Hebezeuge bekannt, wobei mit einem Hebezeug ein erster vertikaler Anteil an der Höhe erbracht wird. Durch eine an einem Anhängemittel des Hebezeuges angebrachte Teleskopvorrichtung wird ein zweiter vertikaler Anteil an der Hubhöhe erbracht, so daß der erste zusammen mit dem zweiten Anteil die Gesamthubhöhe ergibt. Genutzt wird dazu ein Reaktorgebäudekran mit einer speziellen Teleskopvorrichtung.

Eine Brennelement-Lademaschine und ein Verfahren zur Handhabung von Brennelementen sind in DE 10 2006 034 680 A1 offenbart. Die Brennelement-Lademaschine weist einen Führungsmast und einen teleskopartig aus dem Führungsmast ausfahrbaren Brennelementgreifer auf, was eine einfachere Handhabung von Brennelementen ermöglichen soll. Um den Hebevorgang zu vereinfachen, ist an der Hebevorrichtung eine dreiseitig mit einem Leitstand verbundene Videokamera angeordnet, deren Blickrichtung nach unten gerichtet ist. Damit kann eine einfache Handhabung von Brennelementen ermöglicht werden.

Eine Vorrichtung zum Heben, Senken und Transportieren zumindest eines in einem flüssigkeitsgefüllten Becken angeordneten bewegbaren Gegenstandes sowie ein Verfahren zum Heben, Senken und Transportieren eines solchen Gegenstandes ist aus DE 197 56 244 B4 bekannt, wobei der Gegenstand mit einem schwimmbaren Tauchbehälter und mit zumindest zwei Greifvorrichtungen zum Greifen und Halten des Gegenstandes vorhanden sind. Der Tauchbehälter weist einen geschlossenen Flutraum auf und ist mit einem Fluid befüllbar, das durch die Fluidzuführung in den Behälter gelangt. Mittels dem Tauchbehälter und dessen Greifvorrichtung kann der zu transportierende Gegenstand erfaßt, gehoben und transportiert werden. Das Heben, Senken und Transportieren mittels dieser Vorrichtung ist allerdings mit einem hohen Aufwand verbunden. Die Greifvorrichtung ist mittels Funk oder Kabel bedienbar.

In DD 249 689 A1 ist eine Überlastungssicherung für Krane mit verstellbarem Ausleger beschrieben, welche mit einem verstellbaren Stützbock sowie mit je einem Haupt- und Hilfshubwerk ausgerüstet sind. Ziel ist eine Überlastungssicherung, welche eine optimale Ausnutzung der zulässigen Tragkraft und Lastmomente des Kranes mit relativ geringem Aufwand ermöglicht. Bei dieser Überlastungssicherung ist zur Erfassung und schaltungsmäßigen Berücksichtigung der Kranausladung die Einziehwerkseiltrommel über einen Kettentrieb synchron mit einer unterhalb des Hebels angeordneten, die Längsbewegung von zwei unterschiedlichen Kurvenlinealen steuernden Spindel verbunden. Diese Lösung ist zwar zur Überlastungssicherung eines Reaktorgebäudekranes grundsätzlich geeignet, würde aber dessen Umbau und damit entsprechende Kosten nach sich ziehen.

in DE 1 118 943 B wird eine Überlastsicherung für Hebezeuge, insbesondere Auslegekrane mit einem mechanisch wirkenden Lastmittel zwischen Lasthaken und Lasthakenträger beschrieben, welches sich dadurch auszeichnet, daß ein vom Lastmeßmittel gesteuerter, am Lasthaken angeordneter Sender und ein am Hebezeug angeordneter, mit einer Empfangsantenne verbundener Schaltvorgänge auslösender Empfänger vorhanden ist.

Am Lasthaken sind keine Lastsensoren angeordnet, sondern lediglich ein mechanisches Lastmeßmittel, welches die Feder darstellt. Die Feder erfüllt auch nicht den Zweck, nach einer Überlastung einen zusätzlichen Weg zum Schutz des Systems freizugeben, sondern dient als rein mechanisches Lastmeßmittel analog einer Federwaage. Es werden auch keine Lastwerte zum Empfänger gegeben, sondern lediglich ein fixes Funksignal. Die Kransteuerung schaltet auch nicht bei Überlastung eines vorgegebenen Lastwertes den Antrieb aus, sondern bei Ausfall des Funksignals am Empfänger.

Vorhandene Lösungen zur sicheren Handhabung von Brennelementen in Kernkraftwerken sehen aufwendige Vorrichtungen vor. Sofern der Reaktorgebäudekran für diese Aufgabe genutzt wird, erfordert das entweder komplizierte Umbauten, aufwendige Zusatzvorrichtungen oder birgt die Gefahr, daß kein befriedigender Schutz des Brennelementes vor Beschädigung oder die Gefahr der Überlastung und der Beschädigung des Hubwerkes besteht.

Es ist daher Aufgabe der Erfindung, eine Vorrichtung zu entwickeln, mit der es möglich ist, vorhandene Krane, insbesondere Reaktorgebäudekrane, sicher für den Transport von Reaktorelementen so zu nutzen, daß es nicht zu deren Beschädigung kommt.

Diese Aufgabe wird durch eine Vorrichtung zum Überlastungsschutz eines Kranes, insbesondere eines Reaktorgebäudekranes, entsprechend den Merkmalen des ersten Patentanspruches gelöst.

Unteransprüche geben vorteilhafte Ausgestaltungen der Erfindung wieder.

Die erfindungsgemäße Vorrichtung zum Überlastungsschutz besteht aus einem Adapter mit einem Lastsensor, einer Feder, einem Verstärker und einem Sender, der die Lastwerte an einen Empfänger weitergibt. Weiterhin ist ein Empfänger an der Kransteuerung angeordnet, der bei Überschreiten eines vorgegebenen Lastwertes den Antrieb der Seiltrommel oder des Hubwerkes ausschaltet.

Für den Fall, daß sich ein Brennelement beim Herausziehen verklemmt und dadurch höhere Kräfte auftreten, die zur Beschädigung des Brennelementes oder zur Überlastung des Hubwerkes führen können, registriert der Lastsensor ein Überschreiten des zusätzlichen Lastwertes und gibt diesen mittels Senders an den Empfänger der Kransteuerung weiter, was zum sofortigen Abschalten des Hubwerkes führt.

Für die Sicherheit der Anlage ist es vorteilhaft, daß Lastsensor, Verstärker, Sender und Empfänger redundant, d. h. doppelt vorhanden sind. Die Übertragung der Signale zwischen Sender und Empfänger erfolgt vorteilhafterweise mittels Funksignal durch kodierte Datenübertragung mittels Sende- und Quittungssignalen.

Die Kransteuerung, die eine Sicherheits-SPS darstellt, überprüft die Meßsignale auf Diskrepanz und Plausibilität, wobei eine zulässige Toleranzabweichung vorgegeben ist. Werden Fehler in der Hub- oder Sinkbewegung festgestellt, erfolgt das Abschalten.

Vorteilhaft ist es, den Adapter mit dem Lastsensor und dem Sender zwischen der Unterflasche und dem Greifer anzuordnen, wobei auch andere Orte denkbar sind.

Grundsätzlich gibt es verschiedene Möglichkeiten, den Adapter zu gestalten. In einer vorteilhaften Ausgestaltung besteht der Adapter aus einem Gehäuse-Außenteil mit Lastaufnahmevorrichtung, Verstärker und Antenne. Das Gehäuse-Außenteil ist durch seine Form problemlos an der Unterflasche des Kranes anorden- und befestigbar. Am Gehäuse-Innenteil befindet sich die Anbindung für die Last. Gehäuse-Außen- und -Innenteil sind vertikal zueinander verschiebbar. Zwischen diesen Teilen ist ein Kraftaufnehmer mit Lastsensor, Führungsstange und Feder angeordnet. Durch den Lastsensor können beispielsweise Bewegungen innerhalb des Adapters, die durch eine Lasterhöhung entstehen, gemessen, registriert und über den Sender und die Antenne an die Kransteuerung weitergegeben werden. Die Aufgabe der Federn ist es, nach einer durch die Lastauswertung erfaßten Überlast die Überlastung des Systems zu verhindern, indem ein zusätzlicher Weg freigegeben wird, bis das in der Hebung befindliche Hubwerk abgeschaltet ist.
Vorteilhaft ist es, wenn die Feder mittels Mutter vorgespannt ist. Weiterhin ist es vorteilhaft, wenn ein Notfallpuffer angeordnet ist, der bei Bruch der Feder oder des Kraftaufnehmers den Stoß zwischen Gehäuse-Außenteil und Gehäuse-Innenteil dämpft.

Im Folgenden wird die Erfindung an einem Ausführungsbeispiel und drei Figuren näher beschrieben. Die Figuren zeigen:
- Figur 1:: Anordnung des Adapters zwischen Unterflasche und Greifer des Reaktor-Gebäudekranes
- Figur 2:: Schematische Darstellung des Adapters und der Kransteuerung
- Figur 3:: Schnittbild des Adapters mit gebrochener Schnittlinie.

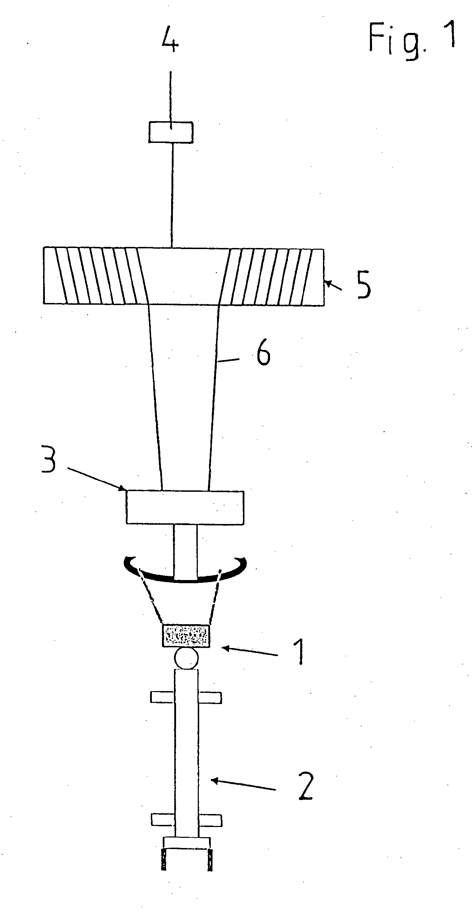

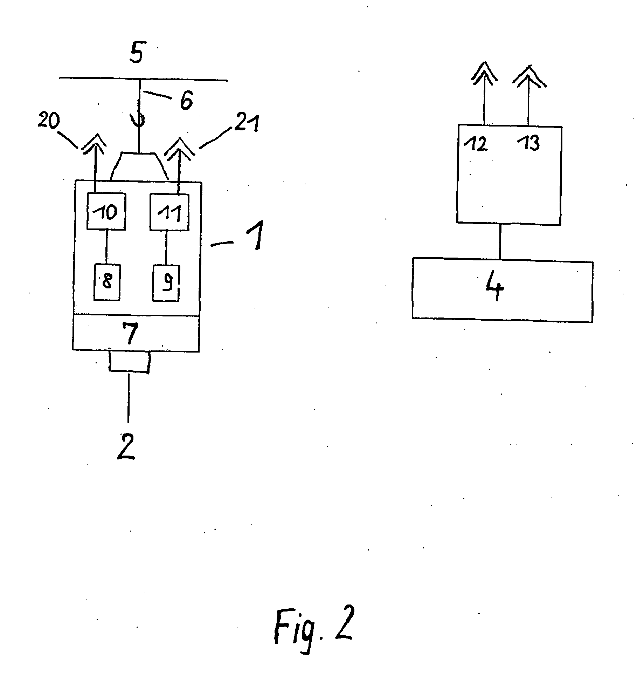

Die *Figur 1* zeigt den Adapter 1, an dem der Greifer 2 mit Last angeordnet ist, wobei die Last ein Brennelement darstellt, welches senkrecht nach oben gezogen wird. Der Adapter 1 ist an der Unterflasche 3 befestigt, die mittels Seil 6 durch die Seiltrommel 5 auf- und abgesenkt wird, was durch die Kransteuerung 4 gesteuert wird. Um die Kransteuerung 4 bei Überlastung abzuschalten, wird dieser Überlastungszustand durch den Adapter 1 registriert und ein Signal an die Kransteuerung 4 gegeben.
Diese Übertragung ist per Funk vorgesehen, wie das die *Figur 2* in schematischer Darstellung zeigt. Der Adapter 1, an dem sich Greifer mit Last 2 befindet, weist die Feder 7 auf und in seinem Inneren redundant die Lastsensoren 8, 9 und Verstärker 10, 11, die ein Signal an die Antennen 20, 21 geben, welches von den Empfängern 12, 13 der Kransteuerung 4 empfangen wird, die bei Überlastung die Bewegung des Seiles 6 an der Seiltrommel 5 abschaltet, so daß keine Beschädigung des Brennelementes oder eine Überlastung des Hubwerkes möglich ist.

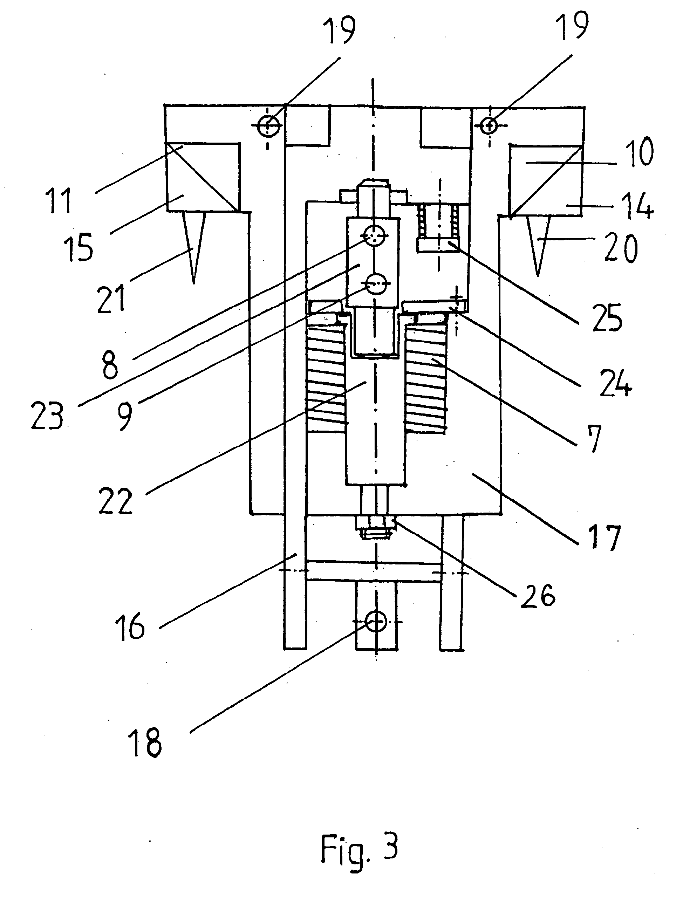

Die *Figur 3* zeigt das Schnittbild des Adapters 1, wobei der Schnitt an der Mittellinie abgewinkelt verläuft, so daß der Notfallpuffer 25 geschnitten ist. Die Anbindung für die Greifereinheit 18 erfolgt im vorliegenden Fall durch eine Öffnung im unteren Teil des Adapters 1. Das Gehäuse-Innenteil 16 und das Teil 18 sind über Paßschrauben miteinander verbunden. Das Gehäuse-Innenteil 16, an dem die Last der Greifereinheit wirkt, drückt auf den Kraftaufnehmer 23, in dem die Lastsensoren 8, 9 übereinander angeordnet sind, wobei der Kraftaufnehmer 23 sich auf der Führungsstange 22 abstützt. Zwischen dem Kraftaufnehmer 23 und der Führungsstange 22 ist als Verdrehsicherung ein Paßstift angeordnet. Zwischen dem Gehäuse-Innenteil 16 und dem Gehäuse-Außenteil 17 ist die Feder 7 angeordnet, die mit der Führungsstange 22 zusammenwirkt. Mittels der Mutter 26 wird die Feder 7 über die Führungsstange 22 vorgespannt. Die Platte 24 ist fest mit dem Gehäuse-Außenteil 17 verschraubt. Das Gehäuse-Außenteil 17 weist Aufnahmevorrichtungen 19 auf, mit denen eine Befestigung an der Unterflasche 3 erfolgt. Weiterhin weist das Gehäuse-Außenteil 17 jeweils zwei redundant wirkende Verstärker 10, 11; Sender 14, 15 und Antennen 20,21 auf. Das Lastsignal wird kontinuierlich über die Lastsensoren 8, 9, über die Verstärker 10, 11; die Sender 14, 15 und die Antennen 20, 21 an die Kransteuerung gesendet. Die Kransteuerung ist selbstüberwachend und schaltet bei Über- oder Unterlast sowie bei Störungen und unzulässigen Betriebszuständen das Hubwerk ab. Für den Fall, daß es zum Bruch der Feder 7 oder des Kraftaufnehmers 23 kommt, sind zwischen Gehäuse-Innenteil 16 und der Platte 24 vier Notfallpuffer 25 angeordnet, die den Stoß zwischen Gehäuse-Außenteil 17 und Gehäuse-Innenteil 16 dämpfen. Die Notfallpuffer 25 stellen Zylinderschrauben dar, die als Stehschrauben in das Gehäuse-Innenteil 16 eingebaut sind, mit der Anschlagbuchse und einer zusammendrückbaren Feder.

Die erfindungsgemäße Lösung hat den Vorteil, daß ein genaues Abschalten bezogen auf die Last unabhängig von der Tragkraft des Hubwerkes bei Hebe- und Senkbetrieb erfolgen kann. Ein hoher Sicherheitsstandard und einfache Handhabung sind gewährleistet, da keine Kabel zwischen Kran und Lastaufnahmemittel erforderlich sind. Die Kransteuerung schaltet bei zu hoher Last ab, so daß eine Beschädigung an den Brennstäben oder eine Überlastung der Hubwerke nicht möglich ist, wobei sich der Reaktorgebäudekran sicher und problemlos für den Transport von Reaktorelementen nutzen läßt.

## Patentansprüche

1. Vorrichtung zum Überlastungsschutz eines Kranes, insbesondere eines Reaktorgebäudekranes mit ertüchtigtem Hilfshubwerk, für den Transport von Reaktorelementen, bestehend aus
- einem Adapter (1) mit einem Lastsensor (8, 9), einer Feder (7), die bei Überlastung einen zusätzlichen Weg zum Schutz des Systems freigibt, einem Verstärker (10, 11) und einem Sender (14, 15), der Lastwerte an einen Empfänger (12, 13) weitergibt, und
- einem Empfänger (12, 13) an der Kransteuerung (4), die bei Überschreiten eines vorgegebenen Lastwertes den Antrieb der Seiltrommel (5) ausschaltet.

2. Vorrichtung nach Anspruch 1, **dadurch gekennzeichnet, daß** Lastsensor (8, 9), Verstärker (10, 11), Sender (14, 15) und Empfänger (12, 13) redundant vorhanden sind.

3. Vorrichtung nach Anspruch 1 und 2, **dadurch gekennzeichnet, daß** die Übertragung der Signale zwischen Sender (14, 15) und Empfänger (12, 13) mittels Funksignal durch codierte Datenübermittlung mittels Sende- und Quittungssignalen erfolgt.

4. Vorrichtung nach den Ansprüchen 1 bis 3, **dadurch gekennzeichnet, daß** die Kransteuerung (4) eine Sicherheits-SPS darstellt, die die Meßsignale auf Diskrepanz und Plausibilität überprüft und bei unzulässigen Toleranzabweichungen oder einem oder mehreren Fehlern die Hub- oder Senkbewegung abschaltet.

5. Vorrichtung nach den Ansprüchen 1 bis 4, **dadurch gekennzeichnet, daß** der Adapter (1) zwischen Unterflasche (3) und Greifer (2) angeordnet ist.

6. Vorrichtung nach den Ansprüchen 1 bis 5, **dadurch gekennzeichnet, daß** der Adapter (1) aus einem Gehäuse-Außenteil (17), mit Lastaufnahmevorrichtung (19), Verstärker (10,11), Sender (14,15) und Antenne (20,21) besteht, in dem ein Gehäuse-Innenteil (16) mit Anbindung (18) für die Last vertikal verschiebbar angeordnet ist und zwischen Gehäuse-Außenteil (17) und Gehäuse-Innenteil (16) ein Kraftaufnehmer (23) mit Lastsensor (8,9), Führungsstange (22) und Feder (7) angeordnet sind.

7. Vorrichtung nach dem Anspruch 6, **dadurch gekennzeichnet, daß** die Feder (7) mittels Mutter (26) und Führungsstange (22) vorgespannt ist.

8. Vorrichtung nach dem Anspruch 6 **dadurch gekennzeichnet, daß** ein Notfallpuffer (25) bei Bruch von Feder (7) oder Kraftaufnehmer (23) den Stoß zwischen Gehäuse-Außenteil (17) und Gehäuse-Innenteil (16) dämpft.

## Claims

1. A device for overload protection in a crane, more specifically a reactor building crane with a reinforced auxiliary hoist, for transporting reactor elements, consisting of
- an adapter (1) with a load sensor (8, 9), a spring (7), which in case of an overload unblocks an additional displacement for protection of the system, an amplifier (10, 11) and an emitter (14, 15) which transmits load values to a receiver (12, 13) and
- a receiver (12, 13) at the crane control system (4), which switches off the drive of the cable drum (5) when a predetermined load value is exceeded.

2. The device according to claim 1, **characterized in that** the load sensor (8, 9), the amplifier (10, 11), the emitter (14, 15) and the receiver (12, 13) are redundantly provided.

3. The device according to claim 1 and 2, **characterized in that** the transmission of the signals between the emitter (14, 15) and the receiver (12, 13) takes place by means of radio signals through encoded data transmission by means of transmission signals and handshake signals.

4. The device according to claims 1 to 3, **characterized in that** the crane control system (4) is a safety PLC, which checks the plausibility and discrepancies of the measurement signals and switches off the hoisting or lowering movement in case of unacceptable deviations from tolerances or of one or several errors.

5. The device according to claims 1 to 4, **characterized in that** the adapter (1) is disposed between the hook block (3) and the gripper (2).

6. The device according to claims 1 to 5, **characterized in that** the adapter (1) consists of an outer housing part (17), with a load suspension device (19), the amplifier (10, 11), the emitter (14, 15) and an antenna (20, 21), in which an inner housing part (16) with a connection (18) for the load is disposed in a vertically displaceable manner and a force absorber (23) with a load sensor (8, 9), a guide rod (22) and a spring (7) is disposed between the outer housing part (17) and the inner housing part (16).

7. The device according to claim 6, **characterized in that** the spring (7) is pretensioned by means of a nut (26) and the guide rod (22).

8. The device according to claim 8, **characterized in that** an emergency damping device (25) dampens the shock between the outer housing part (17) and the inner housing part (16) if the spring (7) or the force absorber (23) break.

## Revendications

1. Dispositif de protection d'une grue contre la surcharge, notamment d'un pont polaire de bâtiment réacteur avec un dispositif de levage auxiliaire renforcé pour le transport d'éléments de réacteur composé :
- d'un adaptateur (1) avec un capteur de charge (8, 9), un ressort (7) libérant un chemin de déplacement supplémentaire pour la protection du système, un amplificateur (10, 11) et un émetteur (14, 15) transmettant des valeurs de charge à un récepteur (12, 13) et
- d'un récepteur (12, 13) disposé sur le système de contrôle de la grue (4) qui arrête le tambour à câbles (5) en cas de dépassement d'une valeur de charge prédéterminée.

2. Dispositif selon la revendication 1, **caractérisé en ce que** le capteur de charge (8, 9), l'émetteur (14, 15) et le récepteur (12, 13) sont redondants.

3. Dispositif selon les revendications 1 et 2, **caractérisé en ce que** la transmission des signaux entre l'émetteur (14, 15) et le récepteur (12, 13) s'effectue au moyen de signaux radio par transmission de données encodées au moyen de signaux d'émission et de signaux d'acquittement.

4. Dispositif selon les revendications 1 à 3, **caractérisé en ce que** le système de contrôle de la grue (4) est un API de sécurité qui contrôle la plausibilité et les écarts des signaux de mesure et arrête le mouvement de levage ou d'abaissement en cas d'écarts de tolérance inadmissibles ou d'une ou plusieurs erreurs.

5. Dispositif selon les revendications 1 à 4, **caractérisé en ce que** l'adaptateur (1) est disposé entre la poulie inférieure (3) et le crochet (2).

6. Dispositif selon les revendications 1 à 5, **caractérisé en ce que** l'adaptateur (1) est composé d'une partie extérieure de boîtier (17) avec un dispositif de suspension de charge (19), l'amplificateur (10, 11), l'émetteur (14, 15) et l'antenne (20, 21) dans lequel est disposée de manière verticalement mobile une partie intérieure de boîtier (16) avec un système de connexion (18) pour la charge et où un dispositif d'absorption de force (23) avec un capteur de charge (8, 9), une barre de guidage (22) et un ressort (7) sont disposés entre la partie extérieure de boîtier (17) et la partie intérieure de boîtier (16).

7. Dispositif selon la revendication 6, **caractérisé en ce que** le ressort (7) est précontraint au moyen d'un écrou (26) et de la barre de guidage (22).

8. Dispositif selon la revendication 6, **caractérisé en ce qu'**un amortisseur de secours (25) absorbe le choc entre la partie extérieure de boîtier (17) et la partie intérieure de boîtier (16) en cas de rupture du ressort (7) ou du dispositif d'absorption de force (23).
